# EUROPEAN PATENT SPECIFICATION

(11) **EP 1 749 988 B1**
(45) Date of publication and mention of the grant of the patent: **10.06.2009**
(21) Application number: 06016378.9
(22) Date of filing: 04.08.2006
(51) Int. Cl.: F01N 3/30, F01N 7/02

(54) **Exhaust gas purification system**
Abgasreinigungssystem
Système de purification de gaz d'échappement

(30) Priority: 04.08.2005 JP 2005227299
(43) Date of publication of application: 07.02.2007
(73) Proprietor: Yamaha Hatsudoki Kabushiki Kaisha, Iwata-shi, Shizuoka-ken 438-8501 (JP)
(72) Inventor: Nishimura, Hidehiro, Iwata-shi Shizuoka-ken 438-8501 (JP); Takii, Osamu, Iwata-shi Shizuoka-ken 438-8501 (JP); Mizutani, Masami, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 722 079
- JP-A- 2004 036 440
- US-A- 3 908 371
- US-A- 3 969 082
- US-A- 5 804 147

## Description

The present invention relates to an **exhaust gas system according to the preamble of the independent claim 1.**

**Such an exhaust gas system can be taken from prior art document** US 5,804,147**. In particular, said prior art document teaches a secondary air supply system, wherein the airflow pipe extends perpendicular through the exhaust pipe casing downstream of the catalytic converter up to a central part of said casing. The end of said pipe is bent into upstream direction in order to face a specific flow passage arranged at a central part of the catalytic converter. Said air pipe is connected with an air pump, so that fresh air is pumped into the specific passage arranged within the catalytic converter in upstream direction of the exhaust gas flow.**

**Prior art document** EP 1 722 079 A1 **according to Article 54(3) EPC discloses an exhaust gas system having an exhaust pipe connected to an internal combustion engine and including an upstream catalyst accommodating part that accommodates an upstream catalyst, and a downstream catalyst accommodating part that accommodates a downstream catalyst. A secondary air supply pipe is provided for supplying secondary air to the exhaust gas, wherein said secondary air supply pipe is connected to a downstream part of the upstream catalyst accommodating part such that a part of the secondary air flowing into the upstream catalyst accommodating part from the secondary air supply pipe counterflows upstream in the direction of the downstream end of the upstream catalyst. Said upstream catalyst accommodating part comprises a wall member elongated from a downstream end of the upstream catalyst to a connection between the upstream catalyst accommodating part and the secondary air supply pipe to be formed integral therewith. The secondary air supply pipe is connected to a reed valve assembly, which allows only flow of a secondary air toward the exhaust pipe but inhibits flow of the secondary air in a reverse direction.**

Conventionally, there is an engine having an exhaust gas purifying function, in which an upstream catalyst, which mainly performs reduction, is arranged on an exhaust upstream side of an exhaust pipe connected to an exhaust port of an internal combustion engine of an engine, a downstream catalyst, which mainly performs an oxygen behavior, is arranged on a downstream side of the upstream catalyst, and a secondary air supply pipe is connected between the upstream catalyst and the downstream catalyst (for example, Patent Document 1). With such engine, both the upstream catalyst and the downstream catalyst in the exhaust pipe are generally arranged in positions close to the internal combustion engine, which is advantageous in heightening a purifying function of such engine. That is, exhaust gases are decreased in temperature in the course of flowing in the exhaust pipe. Accordingly, high-temperature exhaust gases just after being discharged from the internal combustion engine flows through both the upstream catalyst and the downstream catalyst whereby temperatures of the catalysts reach their activated temperatures earlier and the catalysts are improved in oxygen behavior and reduction.
Patent Document 1: Japanese Utility Model Registration No. 2504008

In some cases, however, it is difficult in terms of vehicle layout to arrange both an upstream catalyst and a downstream catalyst in positions close to an internal combustion engine. In some cases, for example, an upstream catalyst is arranged on an upstream side of an exhaust pipe so that a distance from an internal combustion engine is made small, and a downstream catalyst is arranged on a downstream side of the exhaust pipe to be distant from the internal combustion engine in order to avoid interference with apparatuses such as the internal combustion engine, a transmission, etc. Such engine involves a problem that since the downstream catalyst is arranged in a position distant from the internal combustion engine, exhaust gases are decreased in temperature before reaching the downstream catalyst and the downstream catalyst is decreased in oxygen behavior.

**It is an object of the present invention to provide an exhaust gas system as indicated above, wherein** a decrease in oxygen behavior is suppressed even in the case where an upstream catalyst and a downstream catalyst, are arranged away from each other by using a compact and reliable structure.

**This objective is solved in an inventive manner by an exhaust gas system having the features of independent claim 1. Preferred embodiments are laid down in the dependent claims.**

Further, preferably the upstream catalyst accommodating part of the exhaust pipe is connected to an exhaust port of the internal combustion engine of the engine to accommodate the upstream catalyst arranged on an upstream side, and wherein the downstream catalyst accommodating part that accommodates the downstream catalyst is arranged on a downstream side of the upstream catalyst. Therein, the upstream catalyst accommodating part and the downstream catalyst accommodating part may be connected to each other by a pipe, which may constitute the exhaust pipe.

Still further, preferably the upstream catalyst accommodating part is constructed to comprise a drum portion, which is formed to be larger in cross sectional area than the pipe to support inside thereof the upstream catalyst, and a tapered portion connected to a downstream end of the drum portion to be decreased in cross sectional area as it goes downstream, and having an opening, through which a secondary air is introduced from the secondary air supply pipe, and at least a part of an edge of the opening is provided on the tapered portion.

Yet further, preferably the wall member of the upstream catalyst accommodating part comprises a first wall member and a second wall member, the edge of the opening is formed to extend from the first wall member to the second wall member, rising portions rising laterally of the upstream catalyst accommodating part are formed on that edge on the first wall member, which forms the opening, and on that edge on the second wall member, which forms the opening, and an end of the secondary air supply pipe and the rising portions are joined together to connect the secondary air supply pipe to the upstream catalyst accommodating part.

According to an embodiment, the **exhaust gas system** further comprises a muffler that muffles exhaust noise of exhaust gases, and wherein the muffler accommodates therein the downstream catalyst accommodating part.

Preferably, the upstream catalyst accommodating part comprises a support member that separates an inner peripheral surface of the upstream catalyst accommodating part and a side of the upstream catalyst to support the upstream catalyst inside the upstream catalyst accommodating part.

Further, preferably the support member is hollow in shape, the upstream catalyst is fitted into the support member to be supported in the support member with an end of the support member abutting against a side of the upstream catalyst, the support member includes a drum portion being contiguous to the end of the support member and separate from the side of the upstream catalyst, and the support member is supported in the upstream catalyst accommodating part with an outer peripheral surface of the drum portion of the support member abutting against an inner peripheral surface of the upstream catalyst accommodating part.

Still further, preferably the support member includes a drum portion that covers a side of the upstream catalyst over a whole periphery thereof, and is supported in the upstream catalyst accommodating part with a whole outer periphery of the drum portion in pressure contact with an inner peripheral surface of the upstream catalyst accommodating part.

Yet further, preferably one of upstream and downstream ends of the upstream catalyst is joined to the support member and the other end thereof is independent of the support member to be able to elongate. Therein, the other end may abut against the support member.

This objective is also solved in an inventive manner by a saddle-ride type vehicle **having the features of claim 12.**

In the following, the present invention is explained in greater detail with respect to several embodiments thereof in conjunction with the accompanying drawings, wherein:
- Fig. 1: is a side view showing a motorcycle mounting thereon an engine having an exhaust gas purifying function according to a first embodiment,
- Fig. 2: is a front view showing the motorcycle according to an embodiment,
- Fig. 3: is a perspective view showing an apparatus having the exhaust gas purifying function,
- Fig. 4: is a plan view showing the upstream catalyst accommodating part, and
- Fig. 5: is a cross sectional view taken along the line V-V in Fig. 4.

### Description of Reference Numerals and Signs:

1: motorcycle, 3: vehicle body frame, 4: pivot shaft, 5: front fork, 6: cover, 7: grip, 8: leg shield, 9: handle, 10: front fender, 11: front wheel, 12: radiator, 13: seat, 15: engine **unit,** 17: rear arm, 18: rear suspension, 19: rear wheel, 20: exhaust pipe, 22: upstream catalyst accommodating part, 22m: first wall member, 22n: second wall member, 23: pipe portion, 25: downstream catalyst accommodating part, 30: muffler, 31: first partition, 32: second partition, 33: pipe, 34: pipe, 35: tail pipe, 37: primary expansion chamber, 38: secondary expansion chamber, 39: tertiary expansion chamber, 50: upstream catalyst, 51: downstream catalyst, 52: secondary air supply pipe, 53: support member, 56: reed valve **assembly,** 60: exhaust gas purifying apparatus, 63: pipe, 65: resonator, 67: throttle body

Embodiments will be described below with reference to the drawings.

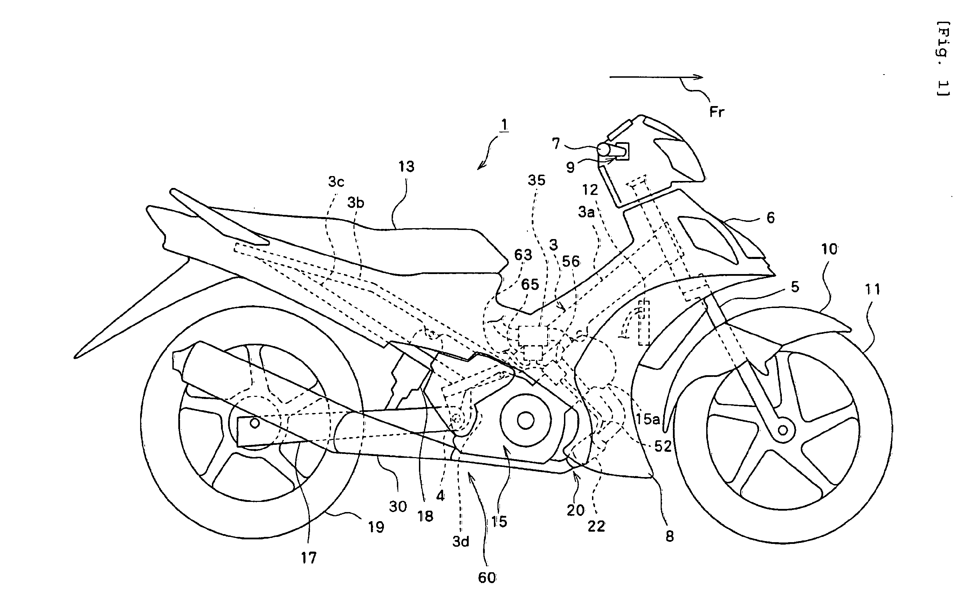

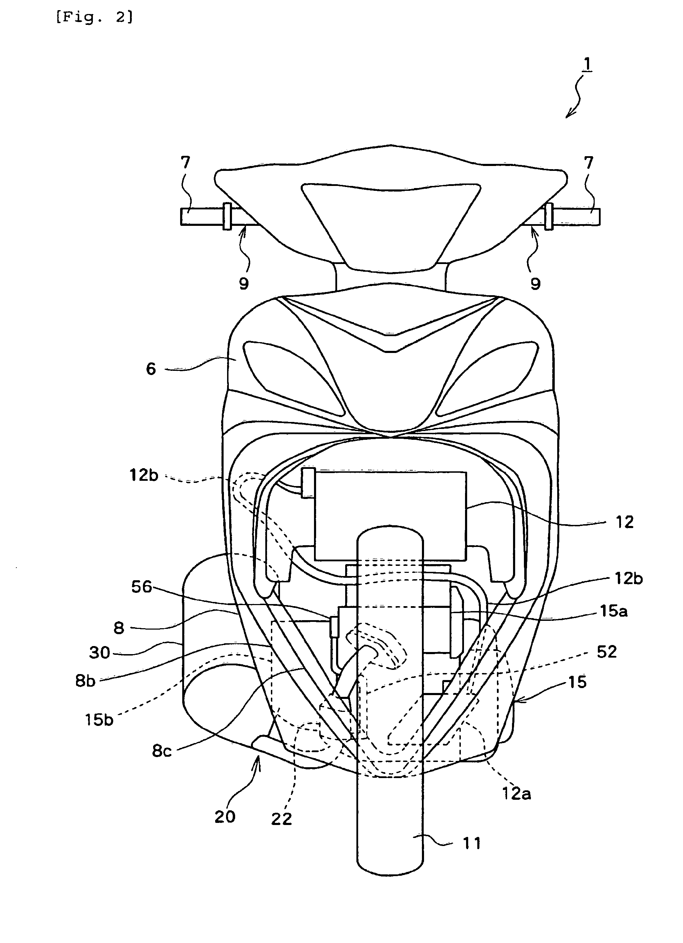

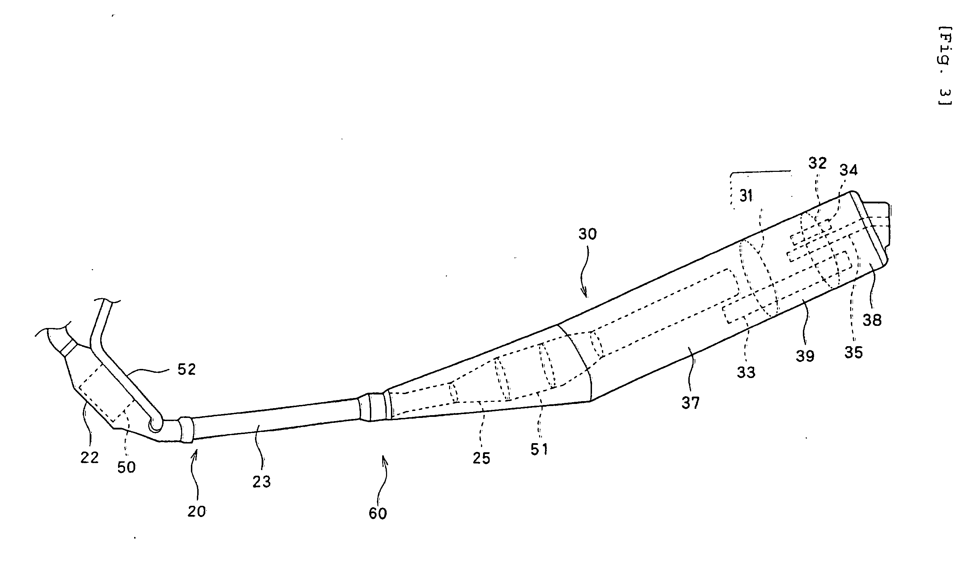

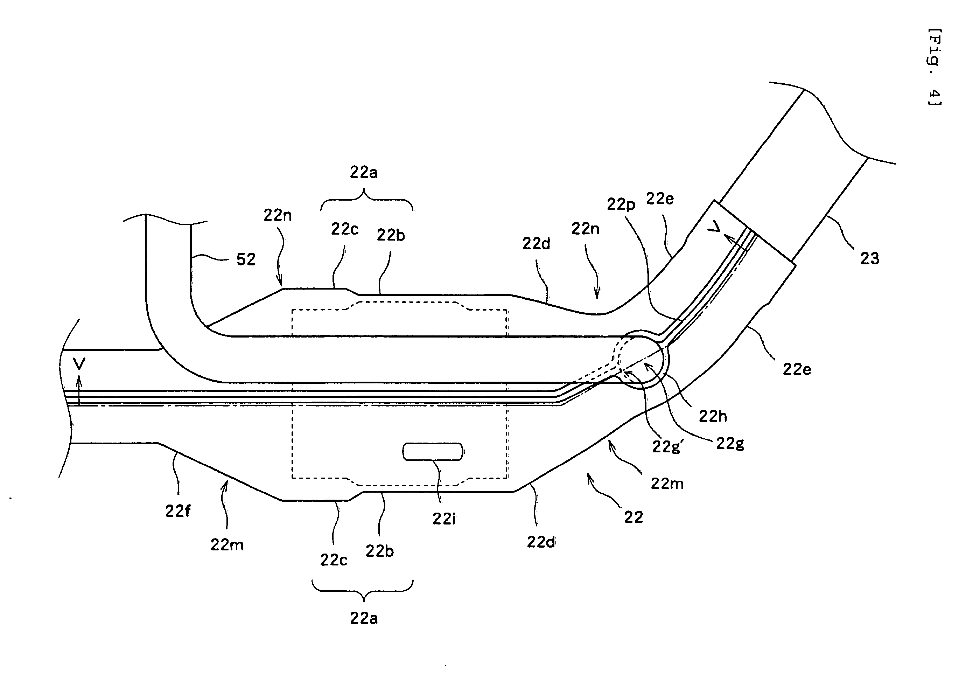

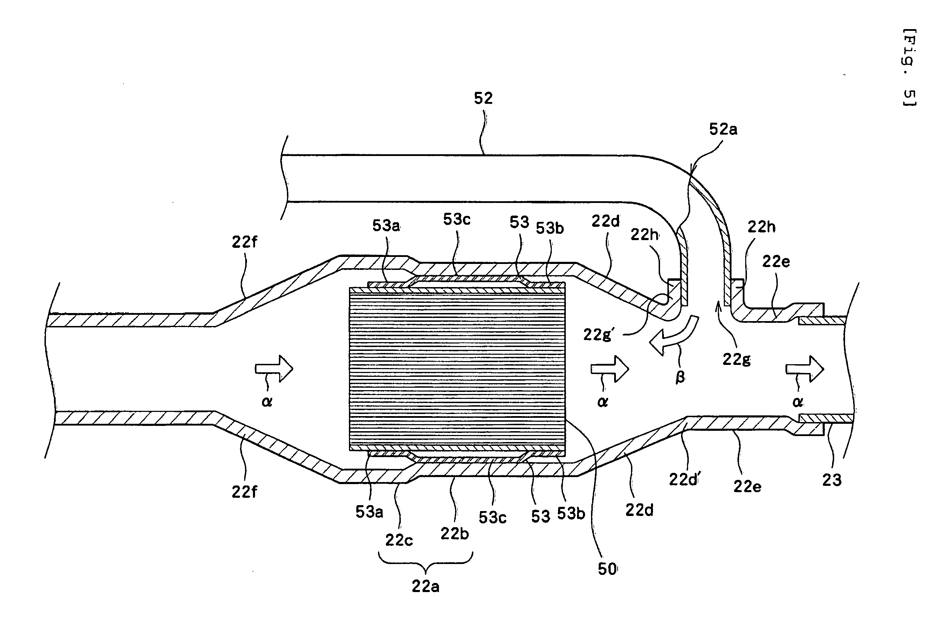

Figs. 1 to 5 are views showing an engine having an exhaust gas purifying function according to an embodiment. Fig. 1 is a side view showing an outward appearance of a motorcycle being a configuration of a saddle-ride type vehicle according to an embodiment, Fig. 2 is a front view showing the motorcycle, Fig. 3 is a perspective view showing the engine according to the embodiment with an apparatus (referred below to as exhaust gas purifying apparatus), which has an exhaust gas purifying function, being centered, Fig. 4 is a plan view showing an upstream catalyst accommodating part, which constitutes the exhaust gas purifying apparatus, and Fig. 5 is a cross sectional view taken along the line V-V in Fig. 4.

In Figs. 1 and 2, a vehicle body frame 3 of a motorcycle 1 includes a main frame 3a. The main frame 3a extends obliquely downward from a forward direction (a direction indicated by Fr in the figure) of a vehicle body on a front side of the vehicle body and is provided at a front end thereof with a head pipe (not shown). The head pipe journals a front fork 5 in a turnable manner. The front fork 5 mounts to an upper end thereof a handle 9 extending in a vehicle width direction, and the handle 9 mounts to both left and right ends thereof grips 7. The front fork 5 journals a front wheel 11 at a lower end thereof. A front fender 10 is supported on the front fork 5 to cover the front wheel 11 from above.

Connected to an intermediate portion of the main frame 3a is a seat rail 3b extending rearwardly and obliquely upwardly in a vehicle traveling direction. A seat 13 is arranged above the seat rail 3b. A back stay 3c is connected to a rear end of the main frame 3a, the back stay 3c extending rearwardly and obliquely upwardly of its connection in the vehicle traveling direction to be connected at its rear end to the seat rail 3b.

Also, a rear arm bracket 3d is connected to the rear end of the main frame 3a. An engine 15 is arranged rearwardly and downwardly of the main frame 3a, the engine 15 being suspended from two intermediate portions of the main frame 3a and supported by the rear arm bracket 3d. One end of a rear arm 17 is mounted at a pivot shaft 4 to the rear arm bracket 3d. The rear arm 17 journals a rear wheel 19 at the other end thereof, the rear arm 17 being enabled to swing vertically about the pivot shaft 4 together with the rear wheel 19. One end of a rear suspension 18 is mounted to an intermediate portion of the rear arm 17 and the other end thereof is mounted to the seat rail 3b.

The engine unit 15 comprises a single cylinder 4-cycle engine, and an internal combustion engine 15a of the engine unit 15 is arranged in an obliquely forwardly inclined posture. A crankcase 15b is arranged below the engine **unit** 15. Connected to an exhaust port of the internal combustion engine 15a is an exhaust pipe 20, through which exhaust gases discharged upon driving of the internal combustion engine 15a flow. The exhaust pipe 20 is protrusively provided forward from the exhaust port in the vehicle traveling direction to be bent downward to pass below the crank**case** 15b of the engine 15 to extend toward the rear of a vehicle. A muffler 30 accommodates a downstream side of the exhaust pipe 20 (see Fig. 3) and is arranged laterally of the rear wheel 19. An upstream catalyst 50, which mainly performs reduction, is arranged on an exhaust upstream side of the exhaust pipe 20. A catalyst accommodating part 22 (referred below to as upstream catalyst accommodating part, and see Fig. 3) in the exhaust pipe 20, which accommodates the upstream catalyst 50, is arranged to be positioned forwardly of the internal combustion engine 15a.

A leg shield 8 is provided forwardly and downwardly a vehicle body cover 6. The leg shield 8 has an opening 8a forward in the vehicle traveling direction, is substantially rectangular-shaped as viewed in front view, and shaped to converge inward in the vehicle width direction as it goes forward. The upstream catalyst accommodating part 22 of the exhaust pipe 20 has its sides and its front surface covered by the leg shield 8. Therefore, even in the case where an external coating of the part changes in color due to generation of heat from the upstream catalyst, the part does not get worse in outward appearance. Also, water or the like does not adhere to the upstream catalyst accommodating part 22 at the time of traveling, so that it is easy to maintain an activated temperature. In addition, Fig. 2 shows crest lines 8b, 8c formed since the leg shield 8 is shaped to converge inward in the vehicle width direction as it goes forward.

A radiator 12 is arranged above the internal combustion engine 15a to cool a cooling water, which flows in the engine **unit** 15, with travel wind. A reservoir tank 12a is arranged below the radiator 12 to regulate a quantity of a cooling water, which flows through a cooling water passage, according to temperature. The reservoir tank 12a and the radiator 12 are communicated to each other through a supply and exhaust pipe 12b.

As shown in Fig. 3, the exhaust pipe 20 is constructed to comprise the upstream catalyst accommodating part 22 and a downstream catalyst accommodating part 25. As described above, the upstream catalyst accommodating part 22 accommodates the upstream catalyst 50, which mainly performs reduction, and the downstream catalyst accommodating part 25 accommodates a downstream catalyst 51, which mainly performs an oxygen behavior. In addition, the downstream catalyst accommodating part 25 and the exhaust pipe 20 downstream of the downstream catalyst accommodating part 25 are accommodated in the muffler 30.

An interior of the muffler 30 is compartmented by a first partition 31 and a second partition 32 into a primary expansion chamber 37, a tertiary expansion chamber 39, and a secondary expansion chamber 38 in the order from the front in the vehicle traveling direction. A downstream end of the exhaust pipe 20 is opened to the primary expansion chamber 37 of the muffler 30 to permit exhaust gases to be discharged into the primary expansion chamber 37. A pipe 33 is arranged in the primary expansion chamber 37 and the secondary expansion chamber 38 to extend through both the first partition 31 and the second partition 32 to permit exhaust gases to flow from the primary expansion chamber 37 to the secondary expansion chamber 38. Also, a pipe 34 is arranged in the secondary expansion chamber 38 and the tertiary expansion chamber 39 to extend through the second partition 32 to permit exhaust gases to flow from the secondary expansion chamber 38 to the tertiary expansion chamber 39. Further, a tail pipe 35 is arranged in the tertiary expansion chamber 39, the tail pipe 35 extending through the second partition 32 to have its end opened outside the muffler 30.

As shown in Figs. 4 and 5, the upstream catalyst accommodating part 22 is formed to be substantially tubular in shape to have a drum portion 22a, and the honeycomb-shaped upstream catalyst 50 is arranged inside the drum portion 22a. An inside diameter of the drum portion 22a is formed to be larger than those of other portions of the exhaust pipe 20 so that other portions of the exhaust pipe 20 and an interior of the upstream catalyst 50 are made substantially equal to each other in cross sectional area, through which exhaust gases flow. Also, in order to support the upstream catalyst 50 in the upstream catalyst accommodating part 22, the drum portion 22a includes a small diameter portion 22b brought into pressure contact with a side of a support member 53, and a large diameter portion 22c having a slightly larger diameter than that of the small diameter portion. In addition, in Fig. 5, exhaust gases flow in a direction indicated by α in the figure. A construction, in which the upstream catalyst 50 is supported by the support member 53, will be described in detail later.

The upstream catalyst accommodating part 22 includes, in addition to the drum portion 22a, a downstream tapered portion 22d, which is contiguous to a downstream end of the drum portion 22a to be gradually decreased in inside diameter toward a downstream side, a downstream pipe portion 22e, which is contiguous to the downstream tapered portion 22d and tubular in shape, and an upstream tapered portion 22f, which is contiguous to an upstream end of the drum portion 22a to be gradually decreased in inside diameter toward an upstream side. In addition, the downstream pipe portion 22e is bent to have its downstream end connected to a pipe portion 23, which connects between the upstream catalyst accommodating part 22 and the downstream catalyst accommodating part 25.

An circular-shaped opening 22g is provided at an upstream end of the downstream pipe portion 22e. An upstream-most portion 22g' positioned on an upstream-most side of an edge of the opening 22g is positioned upstream of a downstream end 22d' of the downstream tapered portion 22d, and the opening 22g is provided to extend from the downstream pipe portion 22e to the downstream tapered portion 22d. A rising portion 22h is formed at the edge of the opening 22g to rise perpendicularly toward a side of the downstream pipe portion 22e. An inner peripheral surface of the rising portion 22h joins an end of a secondary air supply pipe 52 to permit a secondary air to flow into the upstream catalyst accommodating part 22 from the secondary air supply pipe 52. A part of the flowing secondary air counterflows upstream (a direction indicated by β in the figure) to be used for the oxygen behavior in the upstream catalyst 50.

More specifically, that cross sectional area of the upstream catalyst 50, through which exhaust gases flow, is formed to be made substantially equal to those of other portions of the exhaust pipe 20 as described above. On the other hand, while an inside diameter of the downstream tapered portion 22d has its downstream end 22d' substantially equal to that of the pipe portion 23, it is larger on an upstream side of the end 22d' than an inside diameter of the pipe portion 23. Therefore, exhaust gases having flown through the upstream catalyst 50 expands slightly in a space within the downstream tapered portion 22d to be decreased in pressure. Pressure inside the downstream tapered portion 22d is slightly lower than that in the pipe portion 23. Consequently, a part of a secondary air flowing into the upstream catalyst accommodating part 22 from the secondary air supply pipe 52 counterflows upstream to be used for the oxygen behavior at the downstream end of the upstream catalyst 50. Thereby, the oxygen behavior mainly performed by the downstream catalyst 51 can be assisted in the upstream catalyst 50, so that a decrease in the oxygen behavior in an exhaust gas purifying apparatus 60 is suppressed.

The secondary air supply pipe 52 is extended laterally toward the side of the upstream catalyst accommodating part 22 from the opening 22g, bent at a bent portion 52a, and extended separately from and in parallel to the upstream catalyst accommodating part 22. An upstream end of the secondary air supply pipe 52 is connected to a reed valve **assembly** ashy 56 (see Figs. 1 and 2), which allows only flow of a secondary air toward the exhaust pipe 20 but inhibits flow of the secondary air in a reverse direction.

The reed valve **assembly** 56 comprises a check valve to allow inflow of the secondary air into the exhaust pipe 20 and to inhibit flow of the secondary air in the reverse direction. The reed valve **assembly** 56 is connected through a pipe 63 to an air cleaner (not shown) to supply that secondary air, which has flowed through the air cleaner to be purified, to exhaust gases. An opening is formed on a side wall of the pipe 63 for connection between the reed valve **assembly** 56 and the air cleaner, and a box-shaped resonator 65 mounted to a lower portion of a throttle body is connected to the opening. A part of a secondary air flowing into the exhaust pipe 20 flows into the resonator 65 from the pipe 63 to suppress interference of an air, which is generated by pulsation of the secondary air, so that air noise is reduced.

As shown in Fig. 4, the upstream catalyst accommodating part 22 comprises a first wall member 22m and a second wall member 22n, which are extended from an upstream end to a downstream end in a flow direction of exhaust gases to be formed integrally. The first wall member 22m is one of two portions, into which the substantially tubular, upstream catalyst accommodating part 22 are divided with a plane, which includes a center line in the flow direction of exhaust gases, as a boundary, and the second wall member 22n is the other of the two portions. The upstream catalyst accommodating part 22 is formed by joining edges of the first wall member 22m and the second wall member 22n together, and a joined edge 22p of the first wall member 22m and the second wall member 22n extends in parallel to the flow direction of exhaust gases. In this manner, since the first wall member 22m and the second wall member 22n, respectively, extend in the flow direction of exhaust gases to be formed integrally and the joined edge 22p is along the flow direction of exhaust gases, that ridge, which obstructs flow of exhaust gases, does not project from an inner peripheral surface of the upstream catalyst accommodating part 22. Consequently, flow of the secondary air into the upstream catalyst described above is smoothly made.

The edge of the first wall member 22m and the edge of the second wall member 22n are beforehand formed in opposed positions thereof with edges, which are dented to be semi-circular in shape as viewed in plan view. Formed on the edges formed on the respective wall members are the rising portions 22h, which rise laterally (a direction substantially perpendicular to the flow direction of exhaust gases) of the upstream catalyst accommodating part 22. The edges of both the wall members are joined and the opening 22g described above is provided so that a central point of the opening 22g is positioned on the joined edge 22p of the first wall member 22m and the second wall member. In this manner, the rising portions 22h are formed on both the wall members whereby it is possible to form rising portions higher than a rising portion, which is formed by extruding one wall member from inside, thus enabling an increase in strength, with which the secondary air supply pipe 52 is supported.

The cylindrical-shaped support member 53 having a drum portion 53c is arranged inside the drum portion 22a of the upstream catalyst accommodating part 22. The upstream catalyst 50 is formed to be circular in cross section to be fitted into the support member 53. The support member 53 abuts against a side of the upstream catalyst 50 over whole inner peripheries of the upstream and downstream ends 53a, 53b, and the drum portion 53c is separate from the side of the upstream catalyst 50. Thereby, an air layer is produced between the drum portion 53c and the side of the upstream catalyst 50 to improve the upstream catalyst 50 in thermal shield property.

The support member 53 is welded and joined at the upstream end 53a to the side of the upstream catalyst 50. The joined portion is positioned radially inwardly of the large diameter portion 22c of the upstream catalyst accommodating part 22 whereby a weld bead of the joined portion does not interfere with the wall member of the upstream catalyst accommodating part 22. The downstream end of the upstream catalyst 50 is able to expand and contract relative to the support member 53. Therefore, when the upstream catalyst 50 expands thermally, the upstream catalyst 50 elongates downstream and the support member 53 is not deformed. Thereby, no external force due to thermal expansion applies on the joined portion of the support member 53 and the upstream catalyst 50, so that it is possible to increase durability in supporting the upstream catalyst 50 in the upstream catalyst accommodating part 22. Also, as described above since the elongating downstream end of the upstream catalyst 50 also abuts at its side against the end 53b of the support member 53, an increase in strength, with which the upstream catalyst 50 is supported, is achieved.

Also, the support member 53 is supported in the upstream catalyst accommodating part 22 with a whole outer periphery of the drum portion 53c in pressure contact with an inner peripheral surface of the drum portion 22a of the upstream catalyst accommodating part 22. That is, the drum portion 53c of the support member 53 enlarges laterally from the upstream end 53a and the downstream end 53b. Therefore, the support member 53 can elongate elastically in the flow direction of exhaust gases. Both the inner peripheral surface of the drum portion 22a of the upstream catalyst accommodating part 22 and an outer peripheral surface of the drum portion 53c of the support member 53 are circular in cross section. When the supporting member 53 is sandwiched between the first wall member 22m and the second wall member 22n, since the downstream end 53b of the support member 53 is not joined to the upstream catalyst 50, it elongates downstream and the drum portion 53c comes into pressure contact over a whole outer periphery thereof with inner peripheral surfaces of the first wall member 22m and the second wall member 22n.

The drum portion 22a of the first wall member 22m is provided with an elliptical-shaped through-hole 22i. An edge of the through-hole 22i and the outer peripheral surface of the drum portion 53c of the support member 53 are welded and joined to each other, so that the support member 53 is fixed in the upstream catalyst accommodating part 22.

As described above, according to the embodiment, the joined portion of the wall members, which suppresses flow of gases, does not project into the upstream catalyst accommodating part 22 and the secondary air supply pipe 52 is connected to the vicinity of the upstream catalyst 50. Therefore, a secondary air counterflows, so that an oxygen behavior is performed in the upstream catalyst 50 to assist an oxygen behavior in the downstream catalyst 51. Even in the case where the downstream catalyst 51 is arranged in a position away from the internal combustion engine 15a, a decrease in the exhaust gas purifying function of the engine unit 15 is suppressed.

In addition, the teaching of the embodiment is not limited to the embodiment described above but susceptible to various modifications. For example, while according to the embodiment the upstream catalyst accommodating part 22 comprises the first wall member 22m and the second wall member 22n, which are formed integrally, the upstream catalyst accommodating part 22 may comprise a single member. Also, the upstream catalyst accommodating part 22 may comprise three or more wall members so that joined edges of the respective wall members be made in parallel to the flow direction of exhaust gases.

Also, while according to the embodiment two catalysts, that is, the upstream catalyst 50 and the downstream catalyst 51 are arranged in the exhaust pipe 20, the number of catalysts is not limited thereto but three or more catalysts may be accommodated in the exhaust pipe and any two of the catalysts may be selected as an upstream catalyst and a downstream catalyst, and a secondary air supply pipe may be connected to a downstream side of the upstream catalyst.

The description above discloses (amongst others) in order to solve the problem, an embodiment of an engine having an exhaust gas purifying function and comprising an exhaust pipe including an upstream catalyst accommodating part connected to an exhaust port of an internal combustion engine of the engine to accommodate an upstream catalyst arranged on an upstream side, and a downstream catalyst accommodating part that accommodates a downstream catalyst arranged on a downstream side of the upstream catalyst, and a secondary air supply pipe that supplies a secondary air to exhaust gases flowing through the exhaust pipe, and wherein the secondary air supply pipe is connected to a position downstream of the upstream catalyst in the upstream catalyst accommodating part, and the upstream catalyst accommodating part comprises at least one wall member elongated from at least a downstream end of the upstream catalyst to a connection between the upstream catalyst accommodating part and the secondary air supply pipe to be formed integral therewith.

According to this embodiment, a secondary air not only flows in a downstream direction thereof but also flows slightly to the upstream catalyst, which mainly performs reduction. That is, according to this embodiment, since the wall member of the upstream catalyst accommodating part, which accommodates the upstream catalyst, is elongated from the downstream end of the upstream catalyst to the connection between the upstream catalyst accommodating part and the secondary air supply pipe to be formed integral therewith, a joined portion of the member does not project into the upstream catalyst accommodating part, so that there is nothing, which intercepts a counterflow (flowing to an exhaust upstream side) of a secondary air inflowing from the secondary air supply pipe. Therefore, the secondary air flows slightly to the upstream catalyst, and an oxygen behavior is slightly performed also in the upstream catalyst. The upstream catalyst can assist an oxygen behavior performed originally in the downstream catalyst, and a decrease in oxygen behavior in the engine can be suppressed even in the case where the downstream catalyst is arranged away from the internal combustion engine.

In addition, the matter that the wall member is elongated from the downstream end of the upstream catalyst to the connection between the upstream catalyst accommodating part and the secondary air supply pipe to be formed integral therewith means that the wall member is formed integrally in a flow direction of exhaust gases and there is not any joined edge between members, which intersect in the flow direction.

Also, according to a further embodiment, the upstream catalyst accommodating part and the downstream catalyst accommodating part are connected to each other by a pipe, which constitutes the exhaust pipe, the upstream catalyst accommodating part is constructed to comprise a drum portion, which is formed to be larger in cross sectional area than the pipe to support inside thereof the upstream catalyst, and a tapered portion connected to a downstream end of the drum portion to be decreased in cross sectional area as it goes downstream, and having an opening, through which a secondary air is introduced from the secondary air supply pipe, and at least a part of an edge of the opening is provided on the tapered portion. According to the embodiment, that cross sectional area, through which exhaust gases flow, is decreased inside the tapered portion as it goes downstream. Accordingly, a cross sectional area of flow inside the tapered portion is larger than a cross sectional area of flow of the pipe connected to the downstream end of the tapered portion. Therefore, gas pressure inside the tapered portion is slightly smaller than pressure in the pipe connected to the downstream end of the tapered portion. Accordingly, according to the embodiment, since at least a part of that opening, through which a secondary air flows into the exhaust pipe, is provided on the tapered portion, the secondary air is liable to flow toward the upstream catalyst.

Also, according to a further embodiment, the wall member of the upstream catalyst accommodating part comprises a first wall member and a second wall member, the edge of the opening is formed to extend from the first wall member to the second wall member, rising portions rising laterally of the upstream catalyst accommodating part are formed on that edge on the first wall member, which forms the opening, and on that edge on the second wall member, which forms the opening, and an end of the secondary air supply pipe and the rising portions are joined together to connect the secondary air supply pipe to the upstream catalyst accommodating part.

According to the embodiment, since the edge of the opening is formed to extend from the first wall member to the second wall member and the rising portions are formed on the respective wall members, it is possible to form high rising portions as compared with the case where an opening is formed by extruding one wall member from inside and rising portions are formed at an edge thereof. Since the secondary air supply pipe is joined to the high rising portions, it is possible to increase that strength, with which the secondary air supply pipe is supported.

Also, according to a further embodiment, the wall member of the upstream catalyst accommodating part is constructed to comprise a first wall member and a second wall member, which are joined at edges thereof, and joined edges of the first wall member and the second wall member elongate along a flow direction of exhaust gases. According to the embodiment, since the joined edges of the wall members elongate along the flow direction of exhaust gases, that ridge, which obstructs flow of exhaust gases, is hard to be formed on the inner wall of the upstream catalyst accommodating part and flow of exhaust gases toward an exhaust downstream side and flow toward the upstream catalyst can be made further smooth.

Also, according to a further embodiment, a muffler that muffles exhaust noise of exhaust gases is further provided and the muffler accommodates therein the downstream catalyst accommodating part. Since exhaust gases having been decreased in temperature in the course of flowing in the exhaust pipe flow through the downstream catalyst, much time is needed until the downstream catalyst reaches an activated temperature. According to the embodiment, however, since the downstream catalyst can be increased in temperature by exhaust gases in the muffler, the downstream catalyst can be raised to the activated temperature further early.

Also, according to a further embodiment, the upstream catalyst accommodating part comprises a support member that separates an inner peripheral surface of the upstream catalyst accommodating part and a side of the upstream catalyst to support the upstream catalyst inside the upstream catalyst accommodating part. According to the embodiment, the support member supports the upstream catalyst separately from and inside the inner peripheral surface of the upstream catalyst accommodating part. Therefore, transmission of heat generated by activation of the upstream catalyst to the upstream catalyst accommodating part is suppressed, so that the upstream catalyst is improved in thermal shield property.

Also, according to a further embodiment, the support member is hollow in shape, the upstream catalyst is fitted into the support member to be supported in the support member with an end of the support member abutting against a side of the upstream catalyst, the support member includes a drum portion being contiguous to the end of the support member and separate from the side of the upstream catalyst, and the support member is supported in the upstream catalyst accommodating part with an outer peripheral surface of the drum portion of the support member abutting against an inner peripheral surface of the upstream catalyst accommodating part. According to the embodiment, since the drum portion of the support member is separate from the side of the upstream catalyst, transmission of heat generated by activation of the upstream catalyst to the upstream catalyst accommodating part is suppressed, so that the upstream catalyst is improved in thermal shield property.

Also, according to a further embodiment, the support member includes a drum portion that covers a side of the upstream catalyst over a whole periphery thereof, and is supported in the upstream catalyst accommodating part with a whole outer periphery of the drum portion in pressure contact with an inner peripheral surface of the upstream catalyst accommodating part. According to the embodiment, since any clearance, through which exhaust gases flow, is not provided outside the upstream catalyst and all the exhaust gases flow in the upstream catalyst, the function of purifying exhaust gases can be improved.

Also, according to a further embodiment, one of upstream and downstream ends of the upstream catalyst is joined to the support member and the other end thereof is independent of the support member to be able to elongate. According to the embodiment, since when the upstream catalyst expands thermally, the upstream catalyst can elongate independently of the support member and no external force due to thermal expansion applies on the joined portion of the support member and the upstream catalyst, it is possible to increase that strength, with which the upstream catalyst is supported in the upstream catalyst accommodating part. In addition, the other end of the upstream catalyst can elongate independently of the support member means that the upstream catalyst can elongate from an end thereof joined to the support member to the other end thereof at a different coefficient of thermal expansion from that of the support member. In addition, according to the embodiment, the other end of the upstream catalyst is enabled to elongate independently of the support member even when it abuts against or separates from the support member.

Also, according to a further embodiment, the other end abuts against the support member. According to the embodiment, since the upstream catalyst is joined at one end thereof to the support member, enabled to elongate at the other end, and abuts against the support member, it is possible to further increase that strength, with which the upstream catalyst is supported in the upstream catalyst accommodating part.

Also, there is disclosed an embodiment of a saddle-ride type vehicle, which is one mounting thereon the engine described above, in which the upstream catalyst accommodating part is arranged forwardly of the internal combustion engine in a vehicle traveling direction and a side of and the front of the upstream catalyst accommodating part are covered by a leg shield of the vehicle. According to this embodiment, since the front and the side of the upstream catalyst accommodating part are covered by the leg shield, it is possible to decrease factors from outside, such as travel wind, water, etc., which are responsible for temperature drop of the upstream catalyst, thus making it easy to maintain an activated temperature of the upstream catalyst.

The description above further discloses in order to provide an engine having an exhaust gas purifying function and having a decrease in oxygen behavior suppressed even in the case where a downstream catalyst is arranged away from an internal combustion engine, an embodiment wherein, in an engine having an exhaust gas purifying function, an exhaust pipe 20 connected to an internal combustion engine 15a includes an upstream catalyst accommodating part 22 that accommodates an upstream catalyst 50, and a downstream catalyst accommodating part 25 that accommodates a downstream catalyst 51, a secondary air supply pipe 52, which supplies a secondary air to exhaust gases, is connected to a downstream side of the upstream catalyst 50 in the upstream catalyst accommodating part 22, and the upstream catalyst accommodating part 22 comprises at least one wall member elongated from a downstream end of the upstream catalyst 50 to a connection between the upstream catalyst accommodating part 22 and the secondary air supply pipe 52 to be formed integral therewith.

The description above discloses, as a preferred first aspect, an embodiment of an engine having an exhaust gas purifying function and comprising an exhaust pipe including an upstream catalyst accommodating part connected to an exhaust port of an internal combustion engine of the engine to accommodate an upstream catalyst arranged on an upstream side, and a downstream catalyst accommodating part that accommodates a downstream catalyst arranged on a downstream side of the upstream catalyst, and a secondary air supply pipe that supplies a secondary air to exhaust gases flowing through the exhaust pipe, and wherein the secondary air supply pipe is connected to a position downstream of the upstream catalyst in the upstream catalyst accommodating part, and the upstream catalyst accommodating part comprises at least one wall member elongated from at least a downstream end of the upstream catalyst to a connection between the upstream catalyst accommodating part and the secondary air supply pipe to be formed integral therewith.

Further, according to a preferred second aspect, the upstream catalyst accommodating part and the downstream catalyst accommodating part are connected to each other by a pipe, which constitutes the exhaust pipe, the upstream catalyst accommodating part is constructed to comprise a drum portion, which is formed to be larger in cross sectional area than the pipe to support inside thereof the upstream catalyst, and a tapered portion connected to a downstream end of the drum portion to be decreased in cross sectional area as it goes downstream, and having an opening, through which a secondary air is introduced from the secondary air supply pipe, and at least a part of an edge of the opening is provided on the tapered portion.

Further, according to a preferred third aspect, the wall member of the upstream catalyst accommodating part comprises a first wall member and a second wall member, the edge of the opening is formed to extend from the first wall member to the second wall member, rising portions rising laterally of the upstream catalyst accommodating part are formed on that edge on the first wall member, which forms the opening, and on that edge on the second wall member, which forms the opening, and an end of the secondary air supply pipe and the rising portions are joined together to connect the secondary air supply pipe to the upstream catalyst accommodating part.

Further, according to a preferred fourth aspect, the wall member of the upstream catalyst accommodating part is constructed to comprise a first wall member and a second wall member, which are joined at edges thereof, and joined edges of the first wall member and the second wall member elongate along a flow direction of exhaust gases.

Further, according to a preferred fifth aspect, the engine further comprises a muffler that muffles exhaust noise of exhaust gases, and wherein the muffler accommodates therein the downstream catalyst accommodating part.

Further, according to a preferred sixth aspect, the upstream catalyst accommodating part comprises a support member that separates an inner peripheral surface of the upstream catalyst accommodating part and a side of the upstream catalyst to support the upstream catalyst inside the upstream catalyst accommodating part.

Further, according to a preferred seventh aspect, the support member is hollow in shape, the upstream catalyst is fitted into the support member to be supported in the support member with an end of the support member abutting against a side of the upstream catalyst, the support member includes a drum portion being contiguous to the end of the support member and separate from the side of the upstream catalyst, and the support member is supported in the upstream catalyst accommodating part with an outer peripheral surface of the drum portion of the support member abutting against an inner peripheral surface of the upstream catalyst accommodating part.

Further, according to a preferred eighth aspect, the support member includes a drum portion that covers a side of the upstream catalyst over a whole periphery thereof, and is supported in the upstream catalyst accommodating part with a whole outer periphery of the drum portion in pressure contact with an inner peripheral surface of the upstream catalyst accommodating part.

Further, according to a preferred ninth aspect, one of upstream and downstream ends of the upstream catalyst is joined to the support member and the other end thereof is independent of the support member to be able to elongate.

Further, according to a preferred tenth aspect, the other end abuts against the support member.

Further, the description discloses a preferred embodiment of a saddle-ride type vehicle mounting thereon the engine **unit** according to the above aspects, wherein the upstream catalyst accommodating part is arranged forwardly of the internal combustion engine in a vehicle traveling direction and a side of and the front of the upstream catalyst accommodating part are covered by a leg shield of the vehicle.

## Claims

1. Exhaust gas system having an exhaust pipe (20), said exhaust pipe being connected to an internal combustion engine (15a) and including an upstream catalyst accommodating part (22) that accommodates an upstream catalyst (50), and a downstream catalyst accommodating part (25) that accommodates a downstream catalyst (51) and with a secondary air supply pipe (52) for supplying secondary air to the exhaust gases, wherein said secondary air supply pipe (52) is connected to a downstream part of the upstream catalyst accommodating part (22) such that a part of the secondary air flowing into the upstream catalyst accommodating part (22) from the secondary air supply pipe (52) counterflows upstream in the direction of the downstream end of the upstream catalyst (50), said upstream catalyst accommodating part (22) comprises at least one wall member extends downstream of the upstream catalyst (50),
**characterized in that**
said wall member extends to a connection (22g) between the upstream catalyst accommodating part (22) and the secondary air supply pipe (52) to be formed integral therewith, wherein the secondary air supply pipe (52) is connected to a reed valve assembly (56), which allows only flow of a secondary air toward the exhaust pipe (20) but inhibits flow of the secondary air in a reverse direction, wherein the wall member of the upstream catalyst accommodating part (22) is constructed to comprise a first wall member (22m) and a second wall member (22n), which are joined at edges thereof, and joined edges of the first wall member (22m) and the second wall member (22n) elongate along a flow direction of exhaust gases.

2. Exhaust gas system according to one of the claims 1, **characterized in that** the connection between the upstream catalyst accommodating part (22) and the secondary air supply pipe (52) is constituted by an opening (22g) wherein an edge thereof is formed to extend from the first wall member (22m) to the second wall member (22n), rising portions (22h) rising laterally of the upstream catalyst accommodating part (22) are formed on that edge on the first wall member (22m), which forms the opening (22g), and on that edge on the second wall member (22n), which forms the opening (22g), and an end of the secondary air supply pipe (52) and the rising portions (22h) are joined together to connect the secondary air supply pipe (52) to the upstream catalyst accommodating part (22).

3. Exhaust gas system according to one of the claims 2, **characterized in that** said upstream catalyst accommodating part (22) is constructed to comprise a drum portion (22a), which is formed to be larger in cross sectional area than the pipe (23) to support inside thereof the upstream catalyst (50), a tapered portion (22d) is connected to a downstream end of the drum portion (22a) to be decreased in cross sectional area as it goes downstream, wherein at least a part of the edge of the opening (22g) is provided on the tapered portion (22d).

4. Exhaust gas system according to at least one of the claims 1 to 3, **characterized in that** the upstream catalyst accommodating part (22) of the exhaust pipe (20) is connected to an exhaust port of the internal combustion engine (15a) of the engine unit to accommodate the upstream catalyst (50) arranged on an upstream side, and wherein the downstream catalyst accommodating part (25) that accommodates the downstream catalyst (51) is arranged on a downstream side of the upstream catalyst (50).

5. Exhaust gas system according to one of the claims 1 to 4, **characterized in that** the upstream catalyst accommodating part (22) and the downstream catalyst accommodating part (25) are connected to each other by a pipe (23), which constitutes the exhaust pipe (20).

6. Exhaust gas system according to one of the claims 1 to 5, **characterized by** a muffler (30) that muffles exhaust noise of exhaust gases, and wherein the muffler (30) accommodates therein the downstream catalyst accommodating part (25).

7. Exhaust gas system according to one of the claims 1 to 6; **characterized in that** the upstream catalyst accommodating part (22) comprises a support member (53) that separates an inner peripheral surface of the upstream catalyst accommodating part (22) and a side of the upstream catalyst (50) to support the upstream catalyst (50) inside the upstream catalyst accommodating part (22).

8. Exhaust gas system according to claim 7, **characterized in that** the support member (53) is hollow in shape, the upstream catalyst (50) is fitted into the support member (53) to be supported in the support member (53) with an end of the support member abutting against a side of the upstream catalyst (50), the support member (53) includes a drum portion (53c) being contiguous to the end of the support member and separate from the side of the upstream catalyst (50), and the support member (53) is supported in the upstream catalyst accommodating part (22) with an outer peripheral surface of the drum portion (53c) of the support member (53) abutting against an inner peripheral surface of the upstream catalyst accommodating part (22).

9. Exhaust gas system according to claim 7 or 8, **characterized in that** the support member (53) includes a drum portion (53c) that covers a side of the upstream catalyst (50) over a whole periphery thereof, and is supported in the upstream catalyst accommodating part (22) with a whole outer periphery of the drum portion (53c) in pressure contact with an inner peripheral surface of the upstream catalyst accommodating part (22).

10. Exhaust gas system according to one of the claims 7 to 9, **characterized in that** one of upstream and downstream ends of the upstream catalyst (50) is joined to the support member (53) and the other end thereof is independent of the support member (53) to be able to elongate.

11. Exhaust gas system according to claim 10, **characterized in that** the other end abuts against the support member (53).

12. Saddle-ride type vehicle mounting thereon an engine unit (15) and exhaust gas system according to one of the claims 1 or 11, wherein the upstream catalyst accommodating part (22) is arranged forwardly of the internal combustion engine (15a) in a vehicle traveling direction and a side of and the front of the upstream catalyst accommodating part (22) are covered by a leg shield (8) of the vehicle.

## Patentansprüche

1. Abgassystem mit einem Abgasrohr (20), wobei das Abgasrohr mit einer Brennkraftmaschine (15a) verbunden ist und ein stromaufwärtiges Katalysatoraufnahmeteil (22) enthält, dass einen stromaufwärtigen Katalysator (50) aufnimmt, und einem stromabwärtigen Katalysatoraufnahmeteil (25), das einen stromabwärtigen Katalysator (51) aufnimmt und mit einem Sekundärluft- Zuführungsrohr (52) zum Zuführen von Sekundärluft zu den Abgasen, wobei das Sekundärluft- Zuführungsrohr (52) mit einem stromabwärtigen Teil des stromaufwärtigen Katalysatoraufnahmeteils (22) derart verbunden ist, dass ein Teil der Sekundärluft, die in das stromabwärtige Katalysatoraufnahmeteil (25) aus dem zweiten Luftzuführungsrohr (52) strömt, eine Gegenströmung stromaufwärts in die Richtung des stromabwärtigen Endes des stromaufwärtigen Katalysators (50) bildet, wobei das stromaufwärtige Katalysatoraufnahmeteil (22) zumindest ein Wandteil aufweist, erstreckt stromab des stromaufwärtigen Katalysators (50),
**dadurch gekennzeichnet, dass**
das Wandteil sich zu einer Verbindung (22g) zwischen dem stromaufwärtigen Katalysatoraufnahmeteil (22) und dem Sekundärluft- Zuführungsrohr (52) erstreckt, um damit einstückig zu sein, wobei das Sekundärluft- Zuführungsrohr (52) mit einer Reedventilanordnung (56) verbunden ist, die die Strömung einer Sekundärluft nur in Richtung zu dem Abgasrohr (20) gestattet, aber die Strömung der Sekundärluft in eine entgegengesetzte Richtung verhindert, wobei das Wandteil des stromaufwärtigen Katalysatoraufnahmeteils (22) aufgebaut ist, ein erstes Wandteil (22m) und ein zweites Wandteil (22n) aufzuweisen, die an Kanten derselben verbunden sind, und die verbundene Kanten des ersten Wandteils (22m) und des zweiten Wandteils (22n) entlang einer Strömungsrichtung des Abgases langgestreckt sind.

2. Abgassystem nach Anspruche 1, **dadurch gekennzeichnet, dass** die Verbindung zwischen dem stromaufwärtigen Katalysatoraufnahmeteil (22) und dem Sekundärluft- Zuführungsrohr (52) durch eine Öffnung (22g) gebildet ist, wobei eine Kante derselben gebildet ist, sich von dem ersten Wandteil (22m) zu dem zweiten Wandteil (22n) zu erstrecken, wobei aufsteigende Abschnitte (22h), die seitlich des stromaufwärtigen Katalysatoraufnahmeteils (22) aufsteigen, an jener Kante des ersten Wandteils (22m) gebildet sind, und an jener Kante des zweiten Wandteils (22n) gebildet sind, die die Öffnung (22g) bildet, und ein Ende des Sekundärluft- Zuführungsrohrs (52) und der aufsteigenden Abschnitte miteinander verbunden sind, um das Sekundärluft- Zuführungsrohr (52) mit dem stromaufwärtigen Katalysatoraufnahmeteil (22) zu verbinden.

3. Abgassystem nach einem der Ansprüche 1 oder 2, **dadurch gekennzeichnet, dass** das stromaufwärtige Katalysatoraufnahmeteil (22) aufgebaut ist, einen Trommelabschnitt (22a) aufzuweisen, der im Querschnitt größer als das Rohr (23) ist, um in seinem Inneren den stromaufwärtigen Katalysator (50) zu lagern, wobei ein verjüngter Abschnitt (22d) mit einem stromabwärtigen Ende des Trommelabschnitts (22a) verbunden ist, um im Querschnitt im Verlauf stromabwärts, vermindert zu werden, wobei zumindest ein Teil der Kante der Öffnung (22g) an dem verjüngten Abschnitt (22d) vorgesehen ist.

4. Abgassystem nach zumindest einem der Ansprüche 1 bis 3, **dadurch gekennzeichnet, dass** das stromaufwärtige Katalysatoraufnahmeteil (22) des Abgasrohres (20) mit einer Abgasöffnung der Brennkraftmaschine (15a) der Motoreinheit verbunden ist, um den stromaufwärtigen Katalysator (50), angeordnet auf der stromaufwärtigen Seite, aufzunehmen, und wobei das stromabwärtige Katalysatoraufnahmeteil (25), das den stromabwärtigen Katalysator (51) aufnimmt, auf einer stromabwärtigen Seite des stromaufwärtigen Katalysators (50) angeordnet ist.

5. Abgassystem nach einem der Ansprüche 1 bis 4, **dadurch gekennzeichnet, dass** das stromaufwärtige Katalysatoraufnahmeteil (22) und das stromabwärtige Katalysatoraufnahmeteil (25) miteinander durch ein Rohr (23), dass das Abgasrohr (20) bildet, verbunden sind.

6. Abgassystem nach einem der Ansprüche 1 bis 5, **gekennzeichnet durch** einen Schalldämpfer (30), der ein Abgasgeräusch des Abgases dämpft, und wobei der Schalldämpfer (30) darin das stromabwärtige Katalysatoraufnahmeteil (25) aufnimmt.

7. Abgassystem nach einem der Ansprüche 1 bis 6, **dadurch gekennzeichnet, dass** der stromaufwärtige Katalysatoraufnahmeteil (22) ein Lagerteil (53) aufweist, das eine innere Umfangsoberfläche des stromaufwärtigen Katalysatoraufnahmeteils (22) und eine Seite des stromaufwärtigen Katalysators (50) trennt, um den stromaufwärtigen Katalysator (50) innerhalb des stromaufwärtigen Katalysatoraufnahmeteils (22) zu lagern.

8. Abgassystem nach Anspruch 7, **dadurch gekennzeichnet, dass** das Lagerteil (53) in der Form hohl ist, wobei der stromaufwärtige Katalysator (50) in das Lagerteil (53) eingesetzt ist, um in dem Lagerteil (53) gelagert zu werden, wobei ein Ende des Lagerteils gegen eine Seite des stromaufwärtigen Katalysators (50) anliegt, wobei das Lagerteil (53) einen Trommelabschnitt (53c) enthält, der fortlaufend zu dem Ende des Lagerteils ist und von der Seite des stromaufwärtigen Katalysators (50) getrennt ist, und das Lagerteil (53) in dem stromaufwärtigen Katalysatoraufnahmeteil (22) gelagert ist, wobei eine äußere Umfangsoberfläche des Trommelabschnitts (53c) des Lagerteils (53) gegen eine innere Umfangsoberfläche des stromaufwärtigen Katalysatoraufnahmeteils (22) anliegt.

9. Abgassystem nach Anspruch 7 oder 8, **dadurch gekennzeichnet, dass** das Lagerteil (53) einen Trommelabschnitt (53c) enthält, der eine Seite des stromaufwärtigen Katalysators (50) über einen gesamten Umfang desselben abdeckt, und gelagert ist mit dem stromaufwärtigen Katalysatoraufnahmeteil (22) mit einem gesamten Außenumfang des Trommelabschnitts (53c) in Presskontakt mit einer inneren Umfangsoberfläche des stromaufwärtigen Katalysatoraufnahmeteils (22).

10. Abgassystem nach einem der Ansprüche 7 bis 9, **dadurch gekennzeichnet, dass** eines der stromaufwärtigen oder stromabwärtigen Enden des stromaufwärtigen Katalysators (50) mit dem Lagerteil (53) verbunden ist und das andere Ende desselben unabhängig von dem Lagerteil (53) ist, um in der Lage zu sein, sich zu verlängern.

11. Abgassystem nach Anspruch 10, **dadurch gekennzeichnet, dass** das andere Ende gegen das Lagerteil (53) anliegt.

12. Fahrzeug vom Aufsitz- Typ, an dem eine Motoreinheit (15) und ein Abgassystem nach einem der Ansprüche 1 oder 11 montiert sind, wobei das stromaufwärtige Katalysatoraufnahmeteil (22) vor der Brennkraftmaschine (15a) in einer Fahrtrichtung des Fahrzeuges angeordnet ist, und eine Seite des und die Vorderseite des stromaufwärtigen Katalysatoraufnahmeteils (22) durch einen Beinschutz (8) des Fahrzeuges abgedeckt sind.

## Revendications

1. Système de gaz d'échappement, comprenant un tube d'échappement (20), ledit tube d'échappement étant relié à un moteur thermique à combustion interne (15a) et comprenant une partie de logement de catalyseur amont (22), logeant un catalyseur amont (50), et une partie de logement de catalyseur aval (25), logeant un catalyseur aval (51), et avec un tube d'alimentation en air secondaire (52) pour fournir de l'air secondaire aux gaz d'échappement, dans lequel ledit tube d'alimentation en air secondaire (52) est relié à une partie aval de la partie de logement de catalyseur amont (22), de manière qu'une partie de l'air secondaire s'écoulant dans la partie de logement de catalyseur amont (22) en provenance du tube d'alimentation en air secondaire (52), s'écoule en contre-courant orienté vers l'amont dans le sens de l'extrémité aval du catalyseur amont (50), ladite partie de logement de catalyseur amont (22) comprenant au moins un organe formant paroi, s'étendant en aval du catalyseur amont (50),
**caractérisé en ce que**
ledit organe formant paroi s'étend à une connexion (22g) entre la partie de logement de catalyseur amont (22) et le tube d'alimentation en air secondaire (52) devant être formé d'une seule pièce avec elle, dans lequel le tube d'alimentation en air secondaire (52) est relié à un ensemble de clapet anti-retour (56), permettant seulement un écoulement d'air secondaire vers le tube d'échappement (20), mais empêchant tout écoulement d'air secondaire en sens inverse, dans lequel l'organe formant paroi de la partie de logement de catalyseur amont (22) est conçu de manière à comprendre un premier organe formant paroi (22m) et un deuxième organe formant paroi (22n), reliés ensemble par leurs bords, et des bords reliés, du premier organe formant paroi (22m) et du deuxième organe formant paroi (22n), s'étendant dans une direction d'écoulement de gaz d'échappement.

2. Système de gaz d'échappement selon la revendication 1, **caractérisé en ce que** la connexion entre la partie de logement de catalyseur amont (22) et le tube d'alimentation en air secondaire (52) est constituée par une ouverture (22g), dans lequel un bord de celle-ci est formé pour s'étendre du premier organe formant paroi (22m) au deuxième organe formant paroi (22n), des parties montantes (22h), montant latéralement à la partie de logement de catalyseur amont (22), sont formées sur le bord, sur le premier organe formant paroi (22m), formant l'ouverture (22g), et sur le bord situé sur le deuxième organe formant paroi (22n), formant l'ouverture (22g), et une extrémité du tube d'alimentation en air secondaire (52) et les parties montantes (22h) sont reliées ensemble, de manière à connecter le tube d'alimentation en air secondaire (52) à la partie de logement de catalyseur amont (22).

3. Système de gaz d'échappement selon la revendication 2, **caractérisé en ce que** ladite partie de logement de catalyseur amont (22) est conçue pour comprendre une partie formant tambour (22a), formée pour être de section transversale plus grande que le tube (23), de manière à supporter à l'intérieur de celle-ci le catalyseur amont (50), une partie tronconique (22d) est reliée à une extrémité aval de la partie formant tambour (22a), en subissant une diminution de section transversale en allant vers l'aval, dans lequel une partie du bord de l'ouverture (22g) est prévu sur la partie tronconique (22d).

4. Système de gaz d'échappement selon au moins l'une des revendications 1 à 3, **caractérisé en ce que** la partie de logement de catalyseur amont (22) du tube d'échappement (20) est reliée à un orifice d'échappement du moteur thermique à combustion interne (15a) de l'unité à moteur thermique, pour loger le catalyseur amont (50) agencé sur un côté amont, et dans lequel la partie de logement de catalyseur aval (25), qui loge le catalyseur aval (51), est agencée sur un côté aval du catalyseur amont (50).

5. Système de gaz d'échappement selon l'une des revendications 1 à 4, **caractérisé en ce que** la partie de logement de catalyseur amont (22) et la partie de logement de catalyseur aval (25) sont reliées entre elles par un tube (23), constituant le tube d'échappement (20).

6. Système de gaz d'échappement selon l'une des revendications 1 à 5, **caractérisé par** un silencieux (30) atténuant le bruit d'échappement des gaz d'échappement, et dans lequel le silencieux (30) loge en son sein la partie de logement de catalyseur aval (25).

7. Système de gaz d'échappement selon l'une des revendications 1 à 6, **caractérisé en ce que** la partie de logement de catalyseur amont (22) comprend un organe support (53), séparant une surface périphérique intérieure de la partie de logement de catalyseur amont (22) et un côté du catalyseur amont (50), de manière à supporter le catalyseur amont (50) à l'intérieur de la partie de logement de catalyseur amont (22).

8. Système de gaz d'échappement selon la revendication 7, **caractérisé en ce que** l'organe support (53) est de forme creuse, le catalyseur amont (50) est monté dans l'organe support (53) pour être supporté dans l'organe support (53), une extrémité de l'organe support étant en butée contre un côté du catalyseur amont (50), l'organe support (53) comprend une partie formant tambour (53c) contiguë à l'extrémité de l'organe support et séparée du côté du catalyseur amont (50), et l'organe support (53) est supporté dans la partie de logement de catalyseur amont (22) avec une surface périphérique extérieure de la partie formant tambour (53c) de l'organe support (53) butant contre une surface périphérique intérieure de la partie de logement de catalyseur amont (22).

9. Système de gaz d'échappement selon la revendication 7 ou 8, **caractérisé en ce que** l'organe support (53) comprend une partie formant tambour (53c) couvrant un côté du catalyseur amont (50), sur une périphérie complète de celui-ci, et est supporté, dans la partie de logement de catalyseur amont (22), avec une périphérie extérieure complète de la partie formant tambour (53c) en contact de pression avec une surface périphérique intérieure de la partie de logement de catalyseur amont (22).

10. Système de gaz d'échappement selon l'une des revendications 7 à 9, **caractérisé en ce que** l'une des extrémités amont et aval du catalyseur amont (50) est reliée à l'organe support (53) et son autre extrémité est indépendante de l'organe support (53) pour être en mesure de s'allonger.

11. Système de gaz d'échappement selon la revendication 10, **caractérisé en ce que** l'autre extrémité est en butée contre l'organe support (53).

12. Véhicule de type à selle de pilotage, sur lequel est monté une unité de moteur thermique (15) et un système de gaz d'échappement selon l'une des revendications 1 ou 11, dans lequel la partie de logement de catalyseur amont (22) est agencée à l'avant du moteur thermique à combustion interne (15a) en observant dans une direction de déplacement du véhicule, et un côté de et l'avant de la partie de logement de catalyseur amont (22) sont couverts par un protège-jambe (8) du véhicule.
